# EUROPÄISCHE PATENTSCHRIFT

(11) **EP 3 041 696 B1**
(45) Veröffentlichungstag und Bekanntmachung des Hinweises auf die Patenterteilung: **21.06.2017**
(21) Anmeldenummer: 14744116.6
(22) Anmeldetag: 28.07.2014
(51) Int. Cl.: B60H 1/34, B60H 1/00, G07C 7/00

(54) **SYSTEM MIT EINER STEUEREINHEIT**
SYSTEM HAVING A CONTROL UNIT
SYSTÈME PRÉSENTANT UNE UNITÉ DE COMMANDE

(30) Priorität: 09.08.2013 DE 102013108653
(43) Veröffentlichungstag der Anmeldung: 13.07.2016
(73) Patentinhaber: Dr. Schneider Kunststoffwerke GmbH, 96317 Kronach (DE)
(72) Erfinder: SCHWARZ, Josef, 95168 Marktleuthen (DE); LEISTNER, Florian, 96450 Coburg (DE)
(74) Vertreter: Pröll, Jürgen
(86) Internationale Anmeldenummer: PCT/EP2014/066144
(87) Internationale Veröffentlichungsnummer: WO 2015/018679

(56) Entgegenhaltungen:
- EP-A1- 0 908 338
- WO-A1-2007/004984
- DE-A1- 3 817 495
- DE-A1- 19 952 898
- DE-B3- 10 355 827

## Beschreibung

Die Erfindung betrifft System mit einer Steuereinheit zur Ansteuerung mindestens einer Luftdüse, die z. B. in einem Kraftfahrzeug, einem Fahrgastraum, einem Laderaum oder einer Fahrzeugführerkabine eines Land- Luft- oder Wasserfahrzeugs eingesetzt ist. Eine solche Luftdüse weist mehrere Komponenten auf, wie z.B. Längs- und Querlamellen zur Beeinflussung der aus der Luftdüse ausströmenden Luft und teilweise zumindest eine Schließklappe, die im Luftzuführungstrakt der Luftdüse angeordnet ist, um den Luftzuführungsstrom ggf. zu unterbrechen bzw. zu unterbinden oder zu drosseln.

Es sind außerdem Luftdüsen mit separaten und um einen Winkel gegeneinander angeordneten Lamellenblöcken bekannt, wobei in den Lamellenblöcken parallel zueinander und zumeist äquidistant zueinander angeordnete Lamellen vorhanden sind, bzw. im Lamellenblock drehbar um eine Achse gelagert sind. Die Lamellen der einzelnen Lamellenblöcke sind miteinander in der Weise gekoppelt, dass diese jeweils gemeinsam verstellt, d.h. um eine Achse gedreht werden können.

Aus DE 10 2004 046 059 ist eine Luftdüse mit Lamellen mit mindestens einem über einen Antrieb bedienbaren Stellelement zur Regelung des Luftstroms, insbesondere für ein Belüftungssystem eines Kraftfahrzeugs, bekannt. Das Stellelement weist eine Vielzahl von Lamellen auf. Über einen Antrieb des Stellelements ist mindestens ein weiteres Stellelement betätigbar.

Aus DE 10 2012 101 175 A1 ist eine Drosseleinrichtung für den Luftdurchsatz durch einen Lufteinlass offenbart. Diese Drosseleinrichtung für den Luftdurchsatz dient zum Einsatz in einer Karosserie eines Kraftfahrzeuges. Es sind mindestens ein paar zwangsgesteuerte, gegenläufig schwenkbare Klappen vorgesehen, die in einer schwenkenden Stellung den Luftstrom ungehindert durchlassen und in einer anderen Einstellung den Lufteinlass verschließen und in Zwischenstellungen verbringbar sind. Die Klappen können mechanisch per Hand von einem Benutzer oder aber über einen elektromotorischen Antrieb betätigt werden.

Aus DE 20 2009 011 085 U1 ist eine Luftdüse mit einer kugelförmigen Betätigungsvorrichtung bekannt. Die Luftdüse dient zum Leiten von Luftströmungen, insbesondere für Heizungs-, Klima- und Belüftungsanlagen in Kraftfahrzeugen. Die Luftdüse weist mindestens ein Gehäuse mit darin verschwenkbar angeordneten horizontalen und/oder vertikalen Luftleitmitteln auf. Im Weiteren ist eine Stellvorrichtung zum Verschwenken der Luftleitmittel bekannt. Das Verschwenken der Luftleitmittel kann mechanisch durch einen Benutzer oder aber mittels eines Elektromotors erfolgen.

Aus DE 10 2004 002 363 A1 ist eine Stellvorrichtung, insbesondere zur Einstellung zumindest eines Stellelementes zumindest eines Luftausströmers sowie zumindest eines Stellelements zumindest eines Luftsteuerelements in zumindest einem Luftführungskanal in einem Gehäuse einer Heizungs- oder Klimatisierungseinrichtung in einem Kraftfahrzeug bekannt. Die Stellvorrichtung ist mit einem Bediengerät mit zumindest einem Bedienelement und mit zumindest zwei Elementen für eine Übertragung von Bewegungen des Bedienelements auf das Steuerelement ausgestattet. Mit dem zumindest einen Bedienelement des Bediengerätes ist zumindest ein Stellelement des Luftausströmers oder zumindest ein Stellelement des Luftstromsteuerelements betätigbar.

Aus DE 10 2005 042 830 A1 sind eine Vorrichtung und ein Verfahren zur benutzerspezifischen Einstellung von fahrzeuginternen Funktionen und/oder Geräten bekannt. Es ist für mindestens einen Benutzer jeweils ein benutzerspezifischer Datensatz, welcher zumindest ein persönliches Benutzerprofil des Benutzers enthält, im Speicher einer fahrzeuginternen Rechnereinheit und/oder in einer portablen Speichereinheit abgespeichert. Der Benutzer ist mindestens anhand einer persönlichen Kennung identifizierbar, wobei mittels des persönlichen Benutzerprofils fahrzeuginterne Funktionen und/oder Geräte automatisch benutzerspezifisch konfigurierbar sind und zumindest der das persönliche Benutzerprofil umfassende Teil des benutzerspezifischen Datensatzes verschlüsselbar und nur nach erfolgreicher Identifikation des Benutzers, welche mittels dessen persönlicher Kennung erfolgt, entschlüsselbar ist.

Aus DE 10 2005 018 078 A1 ist eine Speichereinrichtung für ein Nutzerprofil bekannt. Das Nutzerprofil kann für mehrere elektronische Einrichtungen oder Funktionen in einem Kraftfahrzeug verwendet werden und dient dazu, dass die dem Nutzerprofil entsprechenden Daten im Fahrzeug bereit stehen, ohne dass ein Nutzer entsprechende Einstellungen vornehmen muss. Das Nutzerprofil kann durch die Einspeicherung in der Speichereinrichtung in verschiedenen Fahrzeugen verwendet werden.

Aus DE 10 2010 015 742 A1 ist ein Verfahren zum Anpassen eines Inhalts für einen Insassen eines Fahrzeugs während einer Fahrzeugfahrt bekannt. Das Verfahren umfasst die Schritte des Bestimmens eines Fahrzeugmodus des Fahrzeuges und des Bestimmens von geeigneten Inhalten für den Insassen auf Basis des Fahrzeugmodus. Der Fahrzeugmodus stellt eine oder mehrere Eigenschaften der Fahrzeugfahrt dar.

Aus DE 10 2005 021 541 A1 ist ein System für kundenspezifische Fahrzeugeinstellungen bekannt. Das System umfasst eine Steuereinheit, die derart angepasst ist, um mit Hilfe einer Fahrzeugeingabestelle und mit einer Fahrzeughilfsvorrichtung zu kommunizieren. Das System umfasst weiterhin eine Datenspeichervorrichtung in Kommunikation mit einer Steuereinheit zum Speichern und Wiederauffinden von elektronischen Audio-Daten für kundenspezifische Klänge, die zur Betätigung der Fahrzeugeingabequelle in Bezug gesetzt sind. Die Datenspeichervorrichtung ist weiterhin dazu geeignet, elektronische Nicht-Audio-Daten für kundenspezifische Einstellungen für die Fahrzeughilfsvorrichtung zu speichern und wiederaufzusuchen. Die Speichereinheit ist so angepasst, um zumindest mit einer Eingabevorrichtung zum Herunterladen der Audio- und der Nicht-Audio-Daten, gespeichert in den Datenspeichervorrichtungsdaten, zu kommunizieren.

Aus DE 10 2007 000 182 A1 ist eine Sitzpositionssteuervorrichtung für ein Fahrzeug bekannt. Die Sitzpositionssteuervorrichtung hat einen Seitenrichtungsaktuator zum Bewegen einer Position des Fahrzeugsitzes in einer seitlichen Richtung des Fahrzeugs, einen Drehrichtungsaktuator zum Bewegen der Position des Fahrzeuges in einer Drehrichtung des Fahrzeuges, eine Bewegungszustandsidentifizierungsvorrichtung zum Identifizieren eines Bewegungszustandes des Fahrzeugs, eine Seiteneinrichtungsantriebs-Steuervorrichtung zum Bewegen der Position des Sitzes in der seitlichen Richtung des Fahrzeuges durch ein Antreiben des Seitenrichtungsaktuators auf der Grundlage des Bewegungszustandes des Fahrzeugs, der durch die Bewegungszustandsidentifizierungsvorrichtung identifiziert wird.

Aus DE 10 2012 020 614 A1 ist ein Verfahren zur Personalisierung einer Fahrzeugfunktion offenbart. Das Verfahren umfasst die Schritte des Ermittelns einer ersten Kennung eines ersten Fahrzeugnutzers anlässlich einer ersten Sitzung in einem Fahrzeug, Erfassen einer Information über eine Betätigung einer Funktion des ersten Fahrzeugs durch den Fahrzeugnutzer, Erzeugen einer Zuordnung der erfassten Information zu der ermittelten ersten Kennung und Abspeichern der Zuordnung zumindest auch außerhalb des ersten Fahrzeugs.

WO 2007/004984 A1 offenbart eine Steuerung für Fahrzeugeinstellungen, wobei nach dem Einsetzen einer Fahrerkarte in einen Fahrtenschreiber, benutzerspezifische Einstellungen für den Fahrbetrieb übernommen werden. Hierzu ist der Fahrtenschreiber mit Steuereinheiten eines Fahrzeugs verbunden.

Nachteilig bei dem bekannten Stand der Technik ist, dass die Komponenten einer Luftdüse oder mehrerer Luftdüsen, die in einem Kraftfahrzeug vorhanden sind und zur Belüftung des Innenraums des Kraftfahrzeugs dienen, und die in einem Kraftfahrzeug verbauten Bussysteme nicht dafür vorgesehen sind, die Steuerung von untergeordneten Komponenten im Fahrgastraum, wie Luftdüsen oder Komponenten, von Lustdüsen direkt anzusteuern. Es ist auch nicht vorgesehen, über eine zentrale Bedieneinheit und eine Datenvermittlung über ein Bussystem die Ansteuerung einer Luftdüse oder von Komponenten einer Luftdüse anzusteuern und zugleich die Einstellung zu speichern, so dass eine einmal gewählte Einstellung später erneut eingestellt werden kann. Eine zentrale Ansteuerung von Luftdüsen oder Komponenten von Luftdüsen und Speicherung von Einstellparametern und Einstellpositionen von Komponenten einer Luftdüse oder einer Luftdüse selbst führt ansonsten zu einem Überfrachten des Bussystems mit untergeordneten Komponen ten und einem erhöhten Datenverkehr auf dem Bus, was unerwünscht ist.

Daher erfolgt zumeist die Einstellung der Komponenten bzw. Luftleitmittel von Luftdüsen vorrangig mittels einer mechanischen Einstellung direkt durch einen Benutzer. Eine Einstellung der Luftleitmittel und/oder weiterer Komponenten einer Luftdüse über eine zentrale Bedieneinheit ist bisher nicht angedacht und würde außerdem das im Kraftfahrzeug vorhandene Bussystem, wie ausgeführt, mit weiterer Datenkommunikation belasten und teilweise überlasten.

Der vorliegenden Erfindung liegt daher die Aufgabe zu Grunde, eine Steuereinheit aufzuzeigen, die es ermöglicht, auch untergeordnete Komponenten in einem Kraftfahrzeug, wie eben gerade eine Luftdüse und deren zugehörigen Komponenten, einzeln, benutzerspezifisch und automatisiert einstellbar und damit ansteuerbar auszuführen, und weiterhin es ermöglicht, eingestellte Konfigurationen der Komponenten abzuspeichern, um diese Einstellung zu einem späteren Zeitpunkt erneut und/oder wiederholt einzustellen.

Diese Aufgabe wird durch die Ausgestaltung einer Steuereinheit mit den Merkmalen des Patentanspruches 1 gelöst.

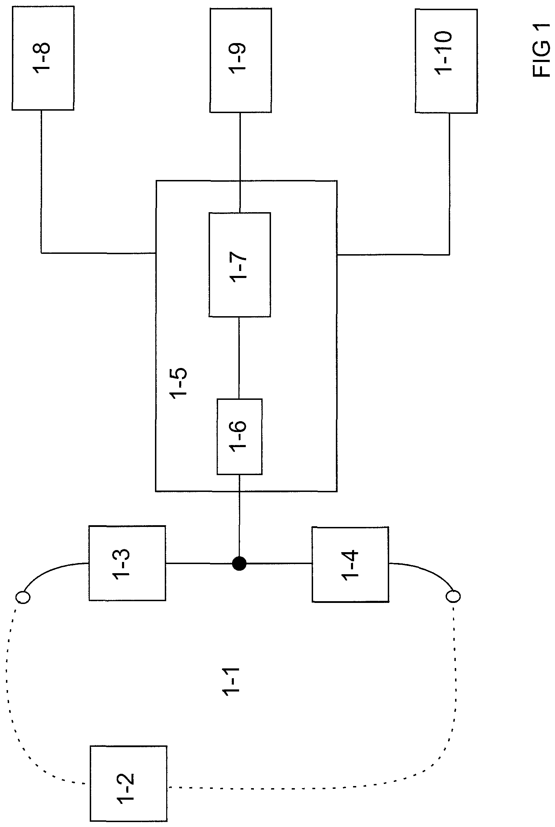

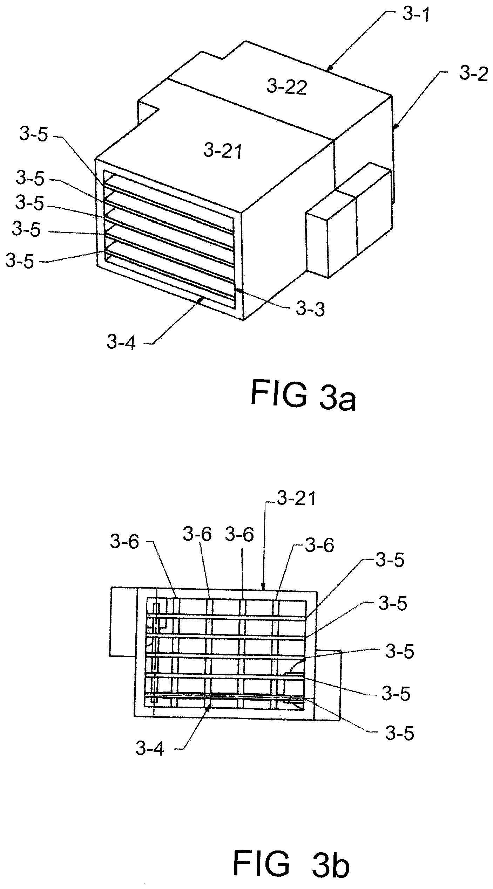

Vorteilhafte Ausgestaltungen der Erfindung sind in den Unteransprüchen, der weiteren Beschreibung und insbesondere anhand der Beschreibung eines konkreten Ausführungsbeispiels anhand der Figuren FIG 1 bis FIG 4, wobei die Figur FIG 3 aus zwei Figuren, FIG 3a und FIG 3b, besteht, dargestellt.

Die vorliegende Erfindung betrifft ein System mit einer Steuereinheit zur Ansteuerung mindestens einer Luftdüse. Eine solche Luftdüse kann in einem Kraftfahrzeug, einem Fahrgastraum, einem Laderaum oder einer Fahrzeugführerkabine eines Land- Luft- oder Wasserfahrzeugs eingesetzt sein. Die Luftdüse weist Komponenten auf, die zur Beeinflussung des durch die Luftdüse zu führenden Luftstroms dienen. Der Luftstrom, der aus der Luftdüse austritt, kann mittels der Komponenten in seiner Orientierung beeinflusst und abgelenkt werden. Außerdem kann die aus der Luftdüse austretende Luftmenge variiert werden. Die Luftdüse weist elektronische Einheiten in Form einer Memory-Einheit und einer Positionsspeichereinheit auf, wobei die Memory-Einheit mit mindestens einem Mittel in Verbindung steht, über welches die Komponenten der Luftdüse einzeln und/oder individuell oder gemeinsam einstellbar bzw. verstellbar sind. Der mindestens einen Luftdüse sind mindestens ein benutzerspezifischer Parameter und/oder mindestens eine Konfiguration zugeordnet, bestehend aus Daten, die den Stellungen der Komponenten zuordenbar sind, welche in der Positionsspeichereinheit speicherbar sind. Die Steuereinheit ist an ein im Kraftfahrzeug vorhandenes Bussystem anschließbar, über das die Steuereinheit mindestens einen Steuerbefehl für die mindestens eine Luftdüse empfängt. Diesen empfangenen Steuerbefehl leitet die Steuereinheit an die Memory-Einheit der mindestens einen Luftdüse weiter, wobei die Memory-Einheit den mindestens einen Steuerbefehl in einen oder mehrere ausführbare Ansteuerbefehle für das mindestens eine Mittel umsetzt und über das mindestens eine Mittel ausführt.

Bei den in einem Kraftfahrzeug integrierten Bussystemen handelt es sich zumeist um massiv inhomogene Systeme mit einem unidirektionalen isochronen Netzwerk mit Ringtopologie. Ein solches System kommt z.B. in Form eines MOST-Busses oder eines CAN-Busses zum Einsatz.

In einigen Bussystemen werden Datenpakete gleicher Größe in gleichen Zeitabständen versendet. Es ist ein einheitlicher Netzwerktakt vorgesehen. Der einheitliche Netzwerktakt wird von einem einzigen Teilnehmer, dem sogenannten "Clock-Master", erzeugt. Unidirektionale Netzringe verfügen lediglich über einen einzigen gerichteten Informationspfad. Solche Bussysteme sind als Stand der Technik anzusehen.

Unter Daten, die den Stellungen der Komponenten zuordenbar sind, sind die Daten der Mittel, die die Stellung der Komponenten vornehmen, zu verstehen. Hierzu sind diese Mittel, wie z.B. Stellmotoren, mit z.B. Sensoren versehen, welche die Stellungen bzw. Veränderungen erfassen. Alternativ können diese Sensoren auch die Stellungen der Komponenten relativ zum Gehäuse oder einem vordefinierten Bezugswert erfassen.

In einer vorteilhaften Ausgestaltung der Erfindung ist vorgesehen, dass die Steuereinheit den mindestens einen Steuerbefehl für die mindestens eine Luftdüse unidirektional an die Memory-Einheit leitet. Es muss durch diese Ausgestaltung kein bidirektionaler Bus zwischen der Steuereinheit und der Memory-Einheit vorhanden sein, es ist ausreichend, wenn die Steuereinheit den empfangenen Befehl einfach an die Memory-Einheit leitet. Damit kann die Memory-Einheit kostengünstig ausgeführt werden, da diese kein aufwändiges Busprotokoll kennen muss, sondern lediglich ausgelegt ist, um Steuerbefehle der Steuereinheit zu empfangen und in Ansteuerbefehle für die Komponenten der Luftdüse und deren Aktuatoren, Stellmotoren, etc. umzusetzen und diese entsprechend anzusteuern.

In einer weiteren vorteilhaften Ausgestaltung der Erfindung ist vorgesehen, dass die Steuereinheit derart ausgestaltet ist, dass diese keine Rückmeldungen von der Memory-Einheit erhält, so dass die Verbindung zwischen der Steuereinheit und der Memory-Einheit unidirektional ausgestaltet ist. Dies reduziert die Kosten der Memory-Einheit und erlaubt es, diese einfach auszugestalten. Es muss auch kein aufwändiges Busprotokoll implementiert werden.

In einer vorteilhaften Weiterbildung ist vorgesehen, dass in der Positionsspeichereinheit mindestens der eine benutzerspezifische Parameter und/oder die mindestens eine Konfiguration des mindestens einen Mittels der Komponenten der mindestens einen Luftdüse abspeicherbar sind. Außerdem nimmt die Memory-Einheit die Ansteuerung der Komponenten der mindestens einen Luftdüse unter Verwendung des in der Positionsspeichereinheit abspeicherbaren mindestens einen benutzerspezifischen Parameters und/oder der mindestens einen Konfiguration der Komponenten vor. Damit muss die Steuereinheit keine Kenntnis von den Mitteln haben, die auf die Komponenten der Luftdüse einwirken und diese Komponenten in deren Lage in der Luftdüse verändern. Die Memory-Einheit setzt einen von der Steuereinheit empfangenen bzw. erhaltenen Steuerbefehl in Steuerbefehle zur Ansteuerung der Mittel um.

In einer anderen Ausgestaltung der Erfindung ist vorgesehen, dass die Memory-Einheit den mindestens einen benutzerspezifischen Parameter und/oder die mindestens eine Konfiguration der Komponenten anhand von Parametern oder Stellungen des mindestens einen Mittels ermittelt und die Memory-Einheit diese Parameter oder die Stellung oder die Stellungen des mindestens einen Mittels oder bei Vorhandensein mehrerer Mittel die Stellungen oder Parameter der Mittel in Form von digitalen Daten in der Positionsspeichereinheit abspeichert. Danach ist die Memory-Einheit von der Aufgabe der Speicherung von Daten quasi befreit, da dies von der Positionsspeichereinheit vorgenommen wird. Es kann in der Positionsspeichereinheit eine Einstellung der Komponenten der Luftdüse gespeichert und zu einem späteren Zeitpunkt wieder eingestellt werden.

Die Erfindung ist in Verbindung mit Luftdüsen zur Führung eines Luftstroms aus einem Luftzuführschacht oder aus einer Luftzuführleitung in Heizungs-, Lüftungs- oder Klimaanlagen in Fahrgasträume und in Laderäume in Kraftfahrzeugen, Land-, Luft- und Wasserfahrzeugen anwendbar. Solche Luftdüsen bestehen aus einem Gehäuse, das in einen Wanddurchbruch einsetzbar oder hinter einem solchen montierbar ist und einen rückseitigen Anschluss für einen Luftzuführschacht oder eine Luftzuführleitung sowie eine vorderseitige Luftausströmöffnung aufweist, wobei im Gehäuse mindestens ein Lamellenblock angeordnet ist, der mindestens zwei mechanisch miteinander gekoppelte Lamellen aufweist, die im Lamellenblock derartig angeordnet sind, dass die mindestens zwei Lamellen um eine Achse verschwenkbar sind, in der Weise, dass durch die miteinander gekoppelten mindestens zwei Lamellen der aus der Luftausströmöffnung der Luftdüse austretende Luftstrom in seiner Orientierung ablenkbar ist oder die mindestens zwei Lamellen die Luftausströmöffnung im Gehäuses nahezu vollständig verschließen, um den Luftstrom zu unterbinden. Durch die Anordnung von Lamellen, die in einem Lamellenblock gelagert sind, ist es möglich, die Lamellen um die Lagerachse im Lamellenblock zu verschwenken und so mittels der Lamellen den Luftstrom zu beeinflussen. Außerdem kann der Lamellenblock selbst in horizontaler und/oder vertikaler Lage verschwenkbar sein oder aber um eine Achse verdrehbar sein. Damit kann der Luftstrom in verschiedene Richtungen gelenkt werden. Durch die mechanische Kopplung der Lamellen im Lamellenblock werden bei Bewegung einer der Lamellen die anderen Lamellen ebenfalls in gleicher Orientierung verschwenkt. Damit können z.B. mit nur einem Elektromotor mehrere Lamellen eines Lamellenblocks gemeinsam verschwenkt werden.

Luftdüsen, die in einem Kraftfahrzeug eingesetzt werden, bieten mannigfache Einstellmöglichkeiten. Um eine einmal eingestellte Einstellung datenmäßig erfasst so abzuspeichern, dass exakt diese Einstellung erneut eingestellt werden kann, benötigt man eine Vielzahl von Daten, die nach der Erfindung gespeichert werden und besonders gut geeignet sind, mittels einer erfindungsgemäßen Steuereinheit in Abhängigkeit von über das Bussystem in einem Kraftfahrzeug erhaltenen Einstellvorgaben verarbeitet zu werden.

In einer Ausgestaltung nach der Erfindung ist vorgesehen, dass die Memory-Einheit mit dem mindestens einen Mittel kommuniziert und das mindestens eine Mittel ein elektrisches Einstellmittel oder ein Aktuator oder ein elektrischer Motor oder ein Schrittmotor ist und zur Einstellung bzw. Verstellung der Komponenten der Luftdüse dient. Indem man eine geeignete Getriebeeinheit vorsieht, können mittels eines Elektromotors oder Aktuators die Lamellen eines Lamellenblocks und/oder der Lamellenblock in ihrer bzw. seiner Lage gegenüber dem Luftstrom verändert werden.

Weiterhin kann vorgesehen sein, dass die Memory-Einheit eine Mikro-Computereinheit oder eine Mikro-Controllereinheit ist und die Positionsspeichereinheit ein Festwertspeicher, insbesondere ein SRAM-Speicher ist und/oder dass die Positionsspeichereinheit ein Teil des Speichers der Mikro-Computereinheit oder der Mikro-Controllereinheit ist. Die Ausgestaltung der Positionsspeichereinheit als SRAM sichert die in der Positionsspeichereinheit abgespeicherten Daten auch bei Ausfall der Energieversorgung, da diese einen eigenen Energiepuffer aufweisen. Es Kann aber auch ein flüchtiger Speicher grundsätzlich zur Anwendung kommen, wenn sichergestellt ist, dass beispielsweise beim Hochfahren der Steuereinheit von einer anderen Quelle die Daten abrufbar sind. Durch die Verwendung von SRAM kann die Positionsspeichereinheit von der Energieversorgung getrennt werden und es kann damit eine, wenn auch nur geringe Energieeinsparung realisiert werden. Die Positionsspeichereinheit ist nur beim Einspeichern von Daten oder beim Auslesen von Daten mit Energie zu versorgen.

Es ist vorgesehen, dass das mindestens eine Mittel auch mindestens einen Sensor aufweist, der die Stellung der Komponenten erfasst und dessen Daten von der Memory-Einheit abrufbar und in der Positionsspeichereinheit abspeicherbar sind, wobei die Speicherung mit einem Bezug zum mindestens einen Sensor erfolgt.

Die Memory-Einheit steht mit Mitteln in Verbindung, welche die Komponenten in Ansprache der Memory-Einheit einstellen und/oder die Daten der Einstellung und/oder den mindestens einen benutzerspezifischen Parameter ermitteln und an die Memory-Einheit übertragen. Die Memory-Einheit speichert die Daten der Einstellung und/oder den benutzerspezifischen Parameter in der Positionsspeichereinheit ab. Durch die Memory-Einheit ist es möglich, die Einstelldaten der an die Steuereinheit angeschlossenen Komponenten zu ermitteln und in der Positionsspeichereinheit abzuspeichern. Damit können die von einem Benutzer vorgenommenen Veränderungen der Einstellmöglichkeiten und/oder der Einstellung der Komponenten erfasst und abgespeichert werden. Eine einmal von einem Benutzer vorgenommene Einstellung kann nach der Abspeicherung der zugehörigen Daten in der Positionsspeichereinheit jederzeit wieder abgerufen und von der Memory-Einheit erneut eingestellt werden. Es ist weiterhin vorgesehen, dass der mindestens eine Sensor zur Detektion und Erfassung der Stellung der mindestens zwei Lamellen des Lamellenblocks und/oder des Lamellenblocks in Relation zum Gehäuse dient. Der mindestens eine Sensor stellt die Daten bereit, die die Einstellung der Lamellen des Lamellenblocks und/oder des Lamellenblocks definieren. Es ist besonders vorteilhaft, diese Daten in Bezug auf das Gehäuse und/oder den Luftstrom, der durch das Gehäuse geleitet wird, zu ermitteln. Die Daten, die der Sensor ermittelt, werden sodann in der Positionsspeichereinheit als Einstelldaten der Lamellen und/oder des Lamellenblocks gespeichert.

Weiterhin kann vorgesehen sein, dass einer der Sensoren zur Detektion und Erfassung der Stellung der mindestens zwei Lamellen im Lamellenblock und/oder des Lamellenblocks in Relation zum Gehäuse dient. Damit kann die Stellung der Lamellen im Lamellenblock und auch die Stellung des Lamellenblocks erfasst werden. Diese Daten der Sensoren können außerdem in der Positionsspeichereinheit gespeichert werden.

In einer weiteren vorteilhaften Ausgestaltung der Erfindung ist vorgesehen, dass eine Eingabeeinheit vorgesehen ist, bei deren Dauerbetätigung mittels Eingaben durch einen Benutzer die Steuereinheit an die die Memory-Einheit Befehle zur Einstellung der Komponenten in der Weise sendet, dass mindestens eine Komponente ihre Lage gegenüber dem Gehäuse oder dem Luftstrom im Gehäuse verändert und die Memory-Einheit diese Veränderung der Lage oder die veränderte Lage der mindestens einen Komponente in der Positionsspeichereinheit nach Beendigung der Dauerbetätigung abspeichert. Es besteht die Möglichkeit, dass ein Benutzer die Einstellung der Luftdüse manuell direkt an der Luftdüse vornimmt, indem er die Stellung der Lamellen und/oder des Lamellenblocks verändert. Es besteht aber auch die Möglichkeit, dass die Lamellen und/oder der Lamellenblock über eine Bedieneinheit, mit der die Steuereinheit in Verbindung steht, in ihrer Einstellung verändert werden können. In Reaktion auf eine Positionsspeicheraufforderung, die entweder vom Benutzer auslösbar ist oder von einer übergeordneten Steuereinheit des Kraftfahrzeuges, werden die aktuellen Daten der Einstellung der Luftdüse in der Positionsspeichereinheit gespeichert. Damit kann zu einem späteren Zeitpunkt diese abgespeicherte Position wieder eingestellt werden. Das Abspeichern der Daten der Position kann z.B. dann erfolgen, wenn das Fahrzeug abgestellt wird, z.B. beim Verbringen in eine Parkposition.

Gemäß einer weiteren Lehre ist vorgesehen, dass die Memory-Einheit die in der Positionsspeichereinheit gespeicherten Daten benutzerspezifisch zuordnet, wobei die benutzerspezifische Erkennung anhand einer Fahreridentifikation durch das Kraftfahrzeug anhand einer Erkennung des Fahrzeugschlüssels des Fahrers erfolgt, wobei die Memory-Einheit in der Positionsspeichereinheit zu den Daten eine dem Fahrzeugschlüssel zugeordnete Kennung abspeichert. Es ist von großem Vorteil, wenn die Einstellung der Komponenten der Luftdüse spezifisch für einen jeweiligen Benutzer des Kraftfahrzeuges erfolgt. Daher speichert die Memory-Einheit in der Positionsspeichereinheit zu einem jeden Positionsdatensatz einer Luftdüse zusätzlich eine Kennung für den Benutzer, der diese Einstellung vorgenommen hat. Dies kann z.B. dadurch erfolgen, dass ein jeder Benutzer eine Kennung einzugeben hat. Alternativ kann dies aber auch anhand von Daten erfolgen, die im Bussystem übertragen werden. So wird inzwischen ein jeder Zugangsschlüssel, auch Fahrzeugschlüssel genannt, für ein Kraftfahrzeug mit einer Kennung versehen. So erkennt das Fahrzeug anhand dieser Kennung den vermeintlichen Benutzer. Die Memory-Einheit speichert daher zu jedem Datensatz die Fahrzeugschlüsselkennung und stellt dann bei der Inbetriebnahme die Luftdüse anhand der in der Positionsspeichereinheit zu einer Fahrzeugschlüsselkennung abgespeicherten Positionsdaten ein.

Auch steuert die Memory-Einheit die Komponenten über das mindestens eine Mittel derart an, dass die Komponenten Bewegungssequenzen ausführen. Es kann auf diese Weise für einen Benutzer eine Demo vorprogrammiert werden, in deren Ablauf dem Nutzer sämtliche Einstellmöglichkeiten der Luftdüse demonstriert werden.

Nachfolgend wird die Erfindung anhand konkreter Ausführungsbeispiele exemplarisch anhand der beigefügten Figuren FIG 1 bis FIG 4 erläutert, wobei die Figur FIG 3 aus den zwei Figuren FIG 3a und FIG 3b besteht.

Diese Beschreibung anhand dieser konkreten Ausführungsbeispiele stellt keine Limitierung der Erfindung auf eines dieser konkreten Ausführungsbeispiele dar.

In den Figuren zeigen:
- FIG 1: eine schematische Darstellung einer Steuereinheit verbunden mit einem Bussystem;
- FIG 2: eine weitere schematische Darstellung einer Steuereinheit verbunden mit einem Bussystem;
- FIG 3a: eine perspektivische Darstellung einer Luftdüse;
- FIG 3b: eine Frontansicht einer Luftdüse und
- FIG 4: eine Luftdüse in schematischer Darstellung.

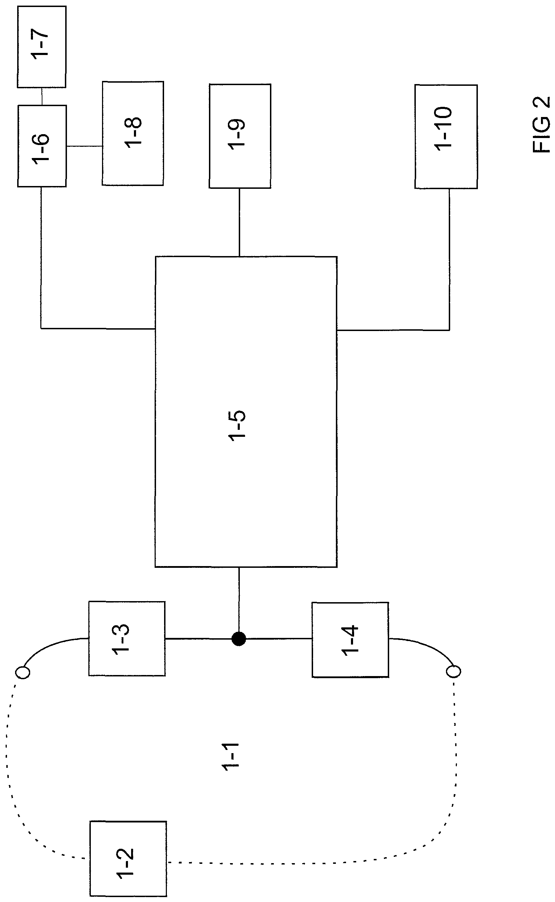

Es werden in der Figurenbeschreibung zu den Figuren FIG 1 und FIG 2 und den Figuren FIG 3a und 3b für gleiche Elemente gleiche Bezugszeichen verwendet. Dies dient der besseren Verständlichkeit der Figurenbeschreibung.

In FIG 1 und FIG 2 ist jeweils ein typischer Aufbau eines bidirektionalen Bussystems 1-1 dargestellt, in bzw. an welchen ein System mit einer Steuereinheit 1-5 integrierbar bzw. anbindbar ist. Das Bussystems 1-1 besteht aus einem sog. Master 1-2, der auch Clock-Master genannt wird, sowie weiterer, im Bussystem 1-1 angeordneter Buskomponenten 1-3, 1-4. Bei diesen Buskomponenten 1-3, 1-4 handelt es sich beispielsweise um die Klimaanlage oder eine weitere in einem Kraftfahrzeug angeordnete Komfort-komponente. Die Komponenten 1-2,1-3, 1-4 des Bussystems 1-1 sind alle miteinander unidirektional Verbunden. Der Clock-Master 1-2 steuert die Funktion des Bussystems 1-1 sowie den Zeittakt für die Versendung der Datenpakete im Bussystem 1-1. Die weiteren Komponenten 1-3 und 1-4 sind mit fixen Adressen beim Clock-Master 1-2 angemeldet. Dies bedeutet, dass der Clock-Master 1-2 diese Netzwerkteilnehmer 1-3 und 1-4 mit Adresse exakt ansprechen kann und diese Teilnehmer mit Adresse ihre Daten versenden.

Es ist weiterhin die Steuereinheit 1-5 vorhanden. Diese kann in das Netzwerk des Bussystems 1-1 eingebunden werden. Auch der Steuereinheit 1-5 ist eine entsprechende Adresse zuordenbar. In einer alternativen Ausgestaltung der Erfindung ist vorgesehen, dass in der Steuereinheit 1-5 eine Überwachungseinheit integriert ist, welche die im Bussystem 1-1 übertragenen Daten auf eine voreinstellbare Adresse überwacht und, wenn Daten für diese Adresse gesendet werden, diese aus dem Bussystem 1-1 entnimmt. Eine solche Vorgehensweise ist besonders dann relevant, wenn das Bussystem 1-1 nicht extrem erweitert werden soll. In diesem Fall übernimmt die Steuereinheit 1-5 die Aufgabe als Slave im Bussystem 1-1 und wartet auf eine entsprechende Kennadresse. Im Fall einer Luftdüse ist dies beispielsweise das Signal des Einsteckens des Zündschlüssels, mit dem zugleich die Kennung des Fahrers, der diesem Zündschlüssel zugeordnet ist, übertragen wird. Wird ein solcher Adressdatensatz übertragen, erkennt dies die Steuereinheit 1-5, entnimmt aus dem Datenstrom diese Daten, wertet diese aus und steuert entsprechend die an ihr anzuschließenden Komponenten 1-8, 1-9, 1-10 an, wie dies im Weiteren dargestellt werden wird.

Die Steuereinheit 1-5 weist in ihrer Ausführung gemäß Fig. 1 eine Memory-Einheit 1-6 sowie eine Positionsspeichereinheit 1-7 auf. In der Ausgestaltung nach FIG 2 sind die Memory-Einheit 1-6 und die Positionsspeichereinheit 1-7 an der Luftdüse 1-8 angeordent bzw. Bestandteil der Luftdüse 1-8.

In der Positionsspeichereinheit 1-7 gemäß der Ausgestaltung nach FIG 1 können mehrere Positionsdaten, Einstelldaten für an die Steuereinheit 1-5 anzuschließenden weiteren Komponenten 1-8, 1-9, 1-10 abgespeichert werden, und zwar stets bezogen auf die Fahrerkennung, die die Steuereinheit 1-5 dem Bussystem 1-1 entnimmt, sowie jeweils den einzelnen angeschlossenen Komponenten 1-8, 1-9, 1-10 zugehörige Einstellparameter bzw. Einstellkonfigurationen.

In der Positionsspeichereinheit 1-7 gemäß der Ausgestaltung nach FIG 2 können mehrere Positionsdaten, Einstelldaten von Komponenten der Luftdüse 1-8 abgespeichert werden, und zwar wiederum bezogen auf die Fahrerkennung, die die Steuereinheit 1-5 dem Bussystem 1-1 entnimmt.

Bei der Komponente 1-8 handelt es sich beispielsweise um eine Luftdüse, bei der Komponente 1-9 um eine LED-Einheit für die Innenbeleuchtung eines Kraftfahrzeugs und bei der Komponente 1-10 um eine weitere Komforteinrichtung, beispielsweise eine weitere Luftdüse.

Ein Nutzer stellt nunmehr anhand einer Bedieneinheit, die in FIG 1 nicht dargestellt ist, und über elektronische/elektrische, an der Luftdüse 1-8 angeordnete Stelleinheiten, wie Aktuator und/oder Elektromotoren, die Luftdüse, wie er sie für sich beim Fahren gerne hätte, ein. Diese Daten werden von der Steuereinheit 1-5 gemäß FIG 1 in der Positionsspeichereinheit 1-7 jeweils zur entsprechenden Schlüsselkennung abgespeichert. Gemäß der Ausgestaltung nach FIG 2 nimmt diese Abspeicherung die Memory-Einheit 1-6 direkt vor.

Die Steuereinheit 1-5 steuert nunmehr, sobald das Fahrzeug abgestellt und der Fahrzeugschlüssel abgezogen wird und diese Information über das Bussystem 1-1 bereitgestellt ist, die Luftdüse 1-8 in eine neutrale Ausgangsposition, beispielsweise wird über einen Klappmechanismus die Luftdüse verschlossen, so dass zum Innenraum des Fahrzeuges hin keine Öffnung der Luftdüse mehr besteht. Wird das Fahrzeug nunmehr über den Fahrzeugschlüssel wieder gestartet, so erkennt dies die Steuereinheit 1-5 und steuert die Memory-Einheit 1-6 entsprechend an, so dass diese der Positionsspeichereinheit 1-7 die entsprechenden zugehörigen Daten entnimmt und anhand dieser entsprechend die Luftdüse 1-8 mit den Einstellkonfigurationsdaten einstellt, wie dies der Fahrer abgespeichert hat bzw. wie die Luftdüse 1-8 eingestellt war, zu dem Zeitpunkt als der Fahrer den Fahrzeugschlüssel entnommen oder das Fahrzeug abgestellt hat.

Die Daten für die Einstellung der Luftdüse 1-8 werden in der Positionsspeichereinheit 1-7 gespeichert und werden nicht an den Clock-Master 1-2 und/oder an eine im Bussystem 1-1 angeordnete Speichereinheit übertragen. Dies entlastet das Bussystem 1-1 und reduziert das Datenaufkommen und ermöglicht zugleich, flexibel auf die Möglichkeiten der Einstellung der Luftdüse 1-8 einzugehen und die Steuereinheit 1-5 und/oder die Memory-Einheit 1-6 und die Positionsspeichereinheit 1-7 an die Bedürfnisse und technischen Vorgaben der Luftdüse 1-8 spezifisch anzupassen. Dies ermöglicht es auch, später eine Luftdüse mit mehreren neuen oder weiteren Einstellmöglichkeiten nachzurüsten. Es muss dann nur die Memory-Einheit 1-6 und ggf. die Positionsspeichereinheit 1-7 entsprechend umprogrammiert werden. Wenn diese aber gemäß FIG 2 Bestandteil der Luftdüse 1-8 sind, kann dies bei der Neugestaltung der Luftdüse 1-8 oder deren Neuentwicklung oder Anpassung bzw. Modifikation direkt berücksichtigt werden; es muss dann nur die Anpassung an die Steuereinheit 1-5 erfolgen.

In einer vorteilhaften Ausgestaltung der Erfindung ist auch die Steuereinheit 1-5 in der Luftdüse integriert.

Bei der Komponente 1-9 handelt es sich um eine LED-Einheit für eine Innenbeleuchtung eines Kraftfahrzeugs. Auch hier kommt die Steuereinheit 1-5 zum Einsatz. In Abhängigkeit der Kennung des Fahrers, die über den Schlüssel - wie bereits beschrieben - erfolgt, kann eine einmal von einem Fahrer verwendete Einstellung für die Innenbeleuchtung entsprechend in der Positionsspeichereinheit 1-7 abgespeichert werden und über die Memory-Einheit 1-6 wird dies entsprechend an die LED-Einheit 1-9 beim Erkennen eines Fahrers weitergegeben und entsprechend eingestellt.

In FIG 1 ist die Memory-Einheit 1-6 mit der Luftdüse 1-8 sowie den weiteren Komponenten 1-9, 1-10 in der Weise verbunden, dass die Memory-Einheit 1-6 die einzelnen Aktuatoren oder Elektromotoren oder die weiteren Elemente der Luftdüse 1-8 und/oder der weiteren Komponenten 1-9, 1-10, welche die Einstellungen und Parameter der Komponenten 1-8 bis 1-10 entsprechend bewirken, erkennt und die ermittelten Daten übernimmt.

In FIG 2 ist die Memory-Einheit 1-6 ein Bestandteil der Luftdüse 1-8 bzw. direkt an diese angebunden. Die Memory-Einheit 1-6 steuert die einzelnen Aktuatoren oder Elektromotoren oder die weiteren Elemente der Luftdüse 1-8, welche die Einstellungen und Parameter der Komponenten der Luftdüse 1-8 entsprechend bewirken.

In FIG 2 ist das zu FIG 1 beschriebene Bussystem mit den zugehörigen Elementen in der Weise verändert dargestellt, dass die Memory-Einheit 1-6 und der Positionsspeicher 1-7 direkt der Luftdüse 1-8 zugeordnet sind und in einer vorteilhaften Ausgestaltung der Erfindung in dieser als Bestandteil integriert sind. Von der Steuereinheit 1-5 für die Luftdüse 1-8 aus dem Bussystem 1-1 empfangene Steuerbefehle werden von der Steuereinheit 1-5 direkt an die Memory-Einheit 1-6 gesendet.

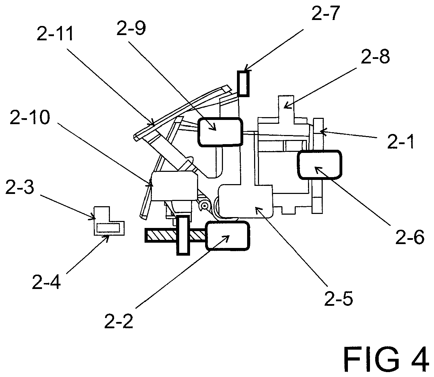

In FIG 4 ist schematisch eine Luftdüse 2-1 für ein Kraftfahrzeug dargestellt. Die Luftdüse 2-1 weist mehrere elektronische/elektrische Komponenten 2-2 bis 2-10 auf, beispielsweise Sensoren 2-3, 2-4, 2-7, 2-8, die dazu dienen, um die Stellung von entsprechenden Luftleitmitteln oder Klappen einer Luftdüse zu erkennen und die Abspeicherung der entsprechenden eingestellten Werte in der Positionsspeichereinheit 1-7 zu ermöglichen. Im Weiteren sind Aktuatoren bzw. Elektromotoren 2-2, 2-5, 2-6, 2-9, 2-10 vorhanden, welche die einzelnen verstellbaren Elemente einer Luftdüse 2-1 elektrisch bedienbar und verstellbar machen. Es sind bei der Luftdüse 2-1 mehrere Lamellen, die in mehreren Lamellenblöcken gefasst sind, vorhanden, die aber in FIG 2 nicht dargestellt sind. Außerdem ist eine Verschlussklappe 2-11 vorgesehen, welche die Luftaustrittsöffnung der Luftdüse 2-1 im geschlossenen Zustand vollständig verschließt, vorzugsweise gegenüber dem Fahrzeuginnenraum.

In FIG 3a und FIG 3b sind eine perspektivische Darstellung einer Luftdüse und eine Frontansicht der Luftdüse dargestellt. Da es sich um dieselbe Luftdüse handelt, jedoch in unterschiedlichen Ansichten, werden die Figuren FIG 3a und FIG 3b nachfolgend weitgehend gemeinsam beschrieben und es werden für gleiche Elemente in beiden Figuren FIG 3a und FIG 3b die gleichen Bezugszeichen verwendet.

Die Luftdüse 3-1 besteht aus einem Gehäuse 3-2. Das Gehäuse 3-2 ist im Prinzip quaderförmig ausgestaltet. Das Gehäuse 3-2 weist eine Wandung auf, die die Gehäuseaußen- und -innenseite ausbildet. Im Frontbereich des Gehäuses 3-2 ist eine Luftaustrittsöffnung vorgesehen. An der entgegengesetzten Seite der Luftdüse 3-1, der Luftaustrittsöffnung gegenüberliegend, ist eine Luftzuführungsöffnung vorgesehen.

Die Luftdüse 3-1 ist als Luftdüse zum Einbau/Einsatz in einem Fahrgastraum in einem Kraftfahrzeug vorgesehen. Die Luftdüse 3-1 dient zur Führung eines Luftstroms aus einem Luftzuführschacht oder einer Luftzuführleitung einer Heizungs-, Lüftungs- oder Klimaanlage in einem Kraftfahrzeug.

Die Luftdüse 3-1 ist in einem Wanddurchbruch, vorzugsweise einem Durchbruch in einem Armaturenbrett, einsetzbar oder hinter einem solchen montierbar. Rückseitig ist dem Gehäuse 3-2 über die Luftzuführöffnung ein Luftstrom zuführbar, der über Luftleitelemente 3-3, 3-4, 3-5, 3-6, die im Gehäuse 3-2 angeordnet sind, lenkbar ist. Im Gehäuse 3-2 sind hierzu mindestens zwei separate und um einen Winkel gegeneinander angeordnete Lamellenblöcke 3-3, 3-4 vorhanden. Jeder der Lamellenblöcke 3-3, 3-4 weist mehrere mechanisch miteinander gekoppelte Lamellen 3-5, 3-6 auf.

Die Lamellen 3-5, 3-6 eines jeden der Lamellenblöcke 3-3, 3-4 sind untereinander derart mechanisch gekoppelt, dass bei einer Bewegung einer der Lamellen 3-5; 3-6 eines Lamellenblocks 3-3; 3-4 alle Lamellen 3-5; 3-6 eines Lamellenblocks 3-3; 3-4 sich gleichförmig und gleichzeitig mitbewegen.

Die Lamellenblöcke 3-3, 3-4 sind im Gehäuse 3-2 in der Weise angeordnet, dass diese feststehend mit dem Gehäuse 3-2 verbunden sind. In der konkreten Ausgestaltung der Erfindung ist der erste Lamellenblock 3-3 mit den darin angeordneten Lamellen 3-5 in der Weise ausgeführt, dass die Lamellen 3-5 in horizontaler Ausrichtung zum Gehäuse 3-2 angeordnet sind, die Lamellen 3-6 des Lamellenblocks 3-4 sind gegenüber dem Lamellenblock 3-3 um 90° verdreht. Sie sind damit vertikal im Gehäuse 3-2 angeordnet. Der Lamellenblock 3-3 und der Lamellenblock 3-4 sind hintereinander angeordnet.

In einer vorteilhaften Ausgestaltung der Erfindung ist vorgesehen, dass auch die Lamellenblöcke 3-3, 3-4 im Gehäuse 3-2 derart angeordnet sind, dass diese beweglich und schwenkbar um die horizontale Ebene und die vertikale Ebene sind, zumindest in einem kleineren Schwenkbereich.

In einer weiteren vorteilhaften Ausgestaltung der Erfindung sind die Lamellenblöcke 3-3, 3-4 und die in den Lamellenblöcken 3-3, 3-4 angeordneten Lamellen 3-5, 3-6 in unterschiedlichen Winkeln zueinander angeordnet. So können die Lamellen 3-5 des ersten Lamellenblocks 3-3 gegenüber den Lamellen 3-6 des zweiten Lamellenblocks 3-4 um 45° oder um 60° verdreht bzw. versetzt angeordnet sein.

In einer weiteren vorteilhaften Ausgestaltung der Erfindung ist vorgesehen, dass die Lamellenblöcke 3-3, 3-4 um 45° gedreht zueinander angeordnet sind.

Gemäß dem Ausführungsbeispiel nach den Figuren FIG 3a und FIG 3b ist vorgesehen, dass die Lamellenblöcke 3-3, 3-4 in einer Vorrichtung im Gehäuse 3-2 gelagert sind, so dass die Lamellenblöcke 3-3, 3-4 gemeinsam oder jeder Lamellenblock 3-3; 3-4 im Gehäuse 3-2 einzeln um eine Rotationsachse, die entlang des Luftstroms verläuft, gedreht werden können.

Durch die Veränderung der Lage der Lamellen 3-5, 3-6 eines Lamellenblocks 3-3, 3-4 ist der Luftstrom, der rückseitig in die Luftdüse 3-1 eintritt und auf der Frontseite über die Luftaustrittsöffnung austritt, veränderbar und ablenkbar.

Diese Ablenkung bzw. Veränderung des Luftstromes erfolgt in Abhängigkeit der Stellung der Lamellen 3-5, 3-6.

Es ist im Weiteren vorgesehen, dass die Lamellen 3-5, 3-6 der Lamellenblöcke 3-3, 3-4 in der Weise betätigbar sind, dass sie die Luftausströmöffnung faktisch verschließen, so dass mittels der Lamellen 3-3, 3-4 der Luftstrom unterbindbar ist.

An oder im Gehäuse 3-2 sind Elektromotoren angeordnet, die zur Einstellung der Lamellen 3-5, 3-6 und/oder der Lamellenblöcke 3-3, 3-4 dienen.

Es ist im Weiteren die elektronische Steuereinheit vorhanden, die die Einstellung der Lamellen 3-5, 3-6 und/oder der Lamellenblöcke 3-3, 3-4 in der vorbeschriebenen Weise vornimmt.

Das Gehäuse 3-2 besteht aus zwei Gehäusehälften 3-21, 3-22, die trennbar miteinander verbunden sind. Vorteilhaft hierbei ist, dass das Gehäuse 3-2 in zwei Teile aufteilbar ist. Dies ermöglicht es, das Gehäuse 3-2 auch nach dem Zusammenbau wieder in die zwei Hälften 3-21 und 3-22 zu zerlegen.

Das Gehäuse 3-2 weist an mindestens einer seiner Außenseiten eine Anschlusseinheit zur elektrischen Kontaktierung und/oder elektrischen Anbindung der Luftdüse 3-1 an die Memory-Einheit 1-6 auf. Im Weiteren ist über diese Anschlusseinheit die elektrische Stromversorgung der Elektromotoren vorgesehen. Von der Anschlusseinheit sind Leitungen zur elektrischen Energieleitung von der Anschlusseinheit zu den Elektromotoren angeordnet vorgesehen. In vorteilhafter Ausgestaltung ist vorgesehen, dass diese Stromführungsleitungen in Form von Leiterbahnen, die in das Gehäuse 3-2 eingelassen oder am Gehäuse 3-2 angeordnet sind, ausgestaltet sind. In einfacher Weise kann auch eine Kabelverbindung hierzu verwendet werden. Diese ist dann in geeigneter Form am oder im Gehäuse 3-2 zu fixieren, beispielsweise durch Kleben oder durch eine Klemmvorrichtung.

Im Weiteren ist vorgesehen, dass weitere Steuerleitungen oder Steuerleiterbahnen am Gehäuse 3-2 zu den Elektromotoren und/oder Sensoren vorhanden sind. Die Sensoren dienen als Geber, um die Position der Lamellen 3-5, 3-6 und/oder der Lamellenblöcke 3-3, 3-4 entsprechend zu erfassen. Diese Daten werden der Memory-Einheit 1-6 zugeführt, die diese Daten in geeigneter Form in der Positionsspeichereinheit 1-7 abspeichert.

Im Weiteren ist vorgesehen, dass zusätzlich zu den Lamellenblöcken 3-3, 3-4 und den in den Lamellenblöcken 3-3, 3-4 angeordneten Lamellen 3-5, 3-6 eine Verschlusseinheit für die Luftdüse 3-1 vorhanden ist, die die Luftaustrittsöffnung bei Nichtgebrauch der Luftdüse 3-1 verschließt.

### Bezugszeichen

- 1-1: Bussystem
- 1-2: Clock-Master
- 1-3: Komponente
- 1-4: Komponente
- 1-5: Steuereinheit
- 1-6: Memory-Einheit
- 1-7: Positionsspeichereinheit
- 1-8: Luftdüse
- 1-9: LED-Einheit
- 1-10: Komfort-Komponente

- 2-1: Luftdüse
- 2-2: Elektromotor
- 2-3: Sensor
- 2-4: Sensor
- 2-5: Elektromotor
- 2-6: Elektromotor
- 2-7: Sensor
- 2-8: Sensor
- 2-9: Elektromotor
- 2-10: Elektromotor
- 2-11: Verschlussklappe

- 3-1: Luftdüse
- 3-2: Gehäuse
- 3-21: Gehäusehälfte
- 3-22: Gehäusehälfte
- 3-3: Lamellenblock
- 3-4: Lamellenblock
- 3-5: Lamellen
- 3-6: Lamellen

## Patentansprüche

1. System mit einer Steuereinheit (1-5) zur Ansteuerung mindestens einer Luftdüse (1-8; 2-1; 3-1),
- wobei die Luftdüse (1-8; 2-1; 3-1) Komponenten (3-3, 3-4, 3-5, 3-6) zur Beeinflussung des durch die Luftdüse (1-8; 2-1; 3-1) zu führenden Luftstroms und diese steuernde elektronische Einheiten (1-6, 1-7) in Form einer Memory-Einheit (1-6) und einer Positionsspeichereinheit (1-7) aufweist, wobei die Memory-Einheit (1-6) mit mindestens einem Mittel (2-2, ..., 2-10) in Verbindung steht, über welches die Komponenten (3-3, 3-4, 3-5, 3-6), einzeln und/oder individuell oder gemeinsam einstellbar sind,
- wobei der mindestens einen Luftdüse (1-8; 2-1; 3-1) mindestens ein benutzerspezifischer Parameter und/oder mindestens eine Konfiguration, bestehend aus Daten der Stellungen der Komponenten (3-3, 3-4, 3-5, 3-6) der Luftdüse (1-8), zuordenbar sind, welche in der Positionsspeichereinheit (1-7) gespeichert sind,
- wobei die Steuereinheit (1-5) über ein angeschlossenes Bussystem (1-1) mindestens einen Steuerbefehl für die mindestens eine Luftdüse (1-8; 2-1; 3-1) empfängt an die Memory-Einheit (1-6) der mindestens einen Luftdüse (1-8; 2-1; 3-1) leitet,
- wobei die Memory-Einheit (1-6) den mindestens einen Steuerbefehl in einen oder mehrere ausführbare Ansteuerbefehle für das mindestens eine Mittel (2-2, ..., 2-10) umsetzt und über das mindestens eine Mittel (2-2, ..., 2-10) ausführt,
- wobei das mindestens eine Mittel (2-2; ... 2-10) auch mindestens einen Sensor (2-3; 2-4; 2-7; 2-8) aufweist, der die Stellung der Komponenten (3-3, 3-4, 3-5, 3-6) erfasst und dessen Daten von der Memory-Einheit (1-6) abrufbar und in der Positionsspeichereinheit (1-7) abspeicherbar sind, wobei die Speicherung mit einem Bezug zum mindestens einen Sensor (2-3; 2-4; 2-7; 2-8) erfolgt, und
- wobei die Memory-Einheit (1-6) die Komponenten (3-3, 3-4, 3,5, 3-6) über das mindestens eine Mittel (2-2; ...; 2-10) derart ansteuert, dass die Komponenten (3-3, 3-4, 3,5, 3-6) Bewegungssequenzen ausführen.

2. System nach Patentanspruch 1, **dadurch gekennzeichnet, dass** die Steuereinheit (1-5) den mindestens einen Steuerbefehl für die mindestens eine Luftdüse (1-8; 2-1; 3-1) unidirektional an die Memory-Einheit (1-6) leitet.

3. System nach Patentanspruch 1 oder 2, **dadurch gekennzeichnet, dass** die Steuereinheit (1-5) derart ausgestaltet ist, dass diese keine Rückmeldungen von der Memory-Einheit (1-6) erhält, so dass die Verbindung zwischen der Steuereinheit (1-5) und der Memory-Einheit (1-6) unidirektional ausgestaltet ist.

4. System nach einem der vorangehenden Patentansprüche 1 bis 3, **dadurch gekennzeichnet, dass** in der Positionsspeichereinheit (1-7) mindestens der eine benutzerspezifische Parameter und/oder die mindestens eine Konfiguration des mindestens einen Mittels (2-2; ... 2-10) der Komponenten (3-3, 3-4, 3-5, 3-6) der mindestens einen Luftdüse (1-8; 2-1; 3-1) abspeicherbar sind und die Memory-Einheit (1-7) die Ansteuerung der Komponenten (3-3, 3-4, 3-5, 3-6) der mindestens einen Luftdüse (1-8; 2-1; 3-1) unter Verwendung des in der Positionsspeichereinheit (1-7) abgespeicherten mindestens einen benutzerspezifischen Parameters und/oder der mindestens einen Konfiguration der Komponenten (3-3, 3-4, 3-5, 3-6) vornimmt.

5. System nach einem der vorangehenden Patentansprüche 1 bis 4, **dadurch gekennzeichnet, dass** die Memory-Einheit (1-6) den mindestens einen benutzerspezifischen Parameter und/oder die mindestens eine Konfiguration der Komponenten (3-3, 3-4, 3-5, 3-6) anhand von Parametern oder Stellungen des mindestens einen Mittels (2-2, ..., 2-10) ermittelt und die Memory-Einheit (1-6) diese Parameter oder die Stellung oder die Stellungen des mindestens einen Mittels (2-2, ..., 2-10) oder bei Vorhandensein mehrerer Mittel (2-2, ..., 2-10) die Stellungen oder Parameter der Mittel (2-2, ..., 2-10) in Form von digitalen Daten in der Positionsspeichereinheit (1-7) abspeichert.

6. System nach einem der vorangehenden Patentansprüche, **dadurch gekennzeichnet, dass** die Luftdüse (1-8; 2-1; 3-1) zur Führung eines Luftstroms aus einem Luftzuführschacht oder aus einer Luftzuführleitung in Hei zungs-, Lüftungs- oder Klimaanlagen für Fahrgasträume, Laderäume oder Fahrzeugführerkabinen in Kraftfahrzeugen, Land-, Luft- oder Wasserfahrzeugen dient.

7. System nach Patentanspruch 1 oder 6, **dadurch gekennzeichnet, dass** die Luftdüse (1-8; 2-1; 3-1) ein Gehäuse (3-2) aufweist, das in einen Wanddurchbruch einsetzbar oder hinter einem solchen montierbar ist und einen rückseitigen Anschluss für einen Luftzuführschacht oder eine Luftzuführleitung sowie eine vorderseitige Luftausströmöffnung aufweist, wobei im Gehäuse (3-2) mindestens ein Lamellenblock (3-3; 3-4) angeordnet ist, der mindestens zwei mechanisch miteinander gekoppelte Lamellen (3-5; 3-6) aufweist, die im Lamellenblock (3-3; 3-4) derartig angeordnet sind, dass die mindestens zwei Lamellen (3-5; 3-6) um eine Achse verschwenkbar sind, in der Weise, dass durch die miteinander gekoppelten mindestens zwei Lamellen (3-5; 3-6) der aus der Luftausströmöffnung der Luftdüse (1-8; 2-1; 3-1) austretende Luftstrom in seiner Orientierung ablenkbar ist oder die mindestens zwei Lamellen (3-5; 3-6) die Luftausströmöffnung im Gehäuses (3-2) nahezu vollständig verschließen, um den Luftstrom zu unterbinden.

8. System nach einem der vorangehenden Patentansprüche, **dadurch gekennzeichnet, dass** die Memory-Einheit (1-6) mit dem mindestens einen Mittel (2-2; ...; 2-10) kommuniziert und dass das mindestens eine Mittel (2-2; 2-5; 2-6; 2-9; 2-10) ein elektrisches Einstellmittel oder ein Aktuator oder ein elektrischer Motor oder ein Schrittmotor ist und zur Einstellung bzw. Verstellung der Komponenten (3-3, 3-4, 3-5, 3-6) der Luftdüse (1-8; 2-1; 3-1) dient.

9. System nach einem der vorangehenden Patentansprüche, dass die Memory-Einheit (1-6) eine Mikro-Computereinheit oder eine Mikro-Controllereinheit umfasst und die Positionsspeichereinheit (1-7) ein Festwertspeicher, insbesondere ein SRAM-Speicher, ist und/oder dass die Positionsspeichereinheit (1-7) ein Teil des Speichers der Mikro-Computereinheit oder der Mikro-Controllereinheit ist.

10. System nach Patentanspruch 7, **dadurch gekennzeichnet, dass** einer der Sensoren (2-3, 2-4, 2-7, 2-8) zur Detektion und Erfassung der Stellung der mindestens zwei Lamellen (3-5; 3-6) des Lamellenblocks (3-3; 3-4) und/oder des Lamellenblocks (3-3; 3-4) in Relation zum Gehäuse (3-2) dient.

11. System nach einem der vorangehenden Patentansprüche, **dadurch gekennzeichnet, dass** eine Eingabeeinheit vorgesehen ist, bei deren Dauerbetätigung mittels Eingaben durch einen Benutzer die Steuereinheit (1-5) an die die Memory-Einheit (1-6) Befehle zur Einstellung der Komponenten (3-3, 3-4, 3-5, 3-6) in der Weise sendet, dass mindestens die Komponenten (3-3, 3-4, 3-5, 3-6) ihre Lagen gegenüber dem Gehäuse (3-2) oder dem Luftstrom im Gehäuse (3-2) verändern, und die Memory-Einheit (1-6) diese Veränderung der Lagen oder die veränderte Lage der mindestens einen Komponente (3-3, 3-4, 3-5, 3-6) in der Positionsspeichereinheit (1-7) nach Beendigung der Dauerbetätigung abspeichert.

12. System nach einem der vorangehenden Patentansprüche, **dadurch gekennzeichnet, dass** die Memory-Einheit (1-6) die in der Positionsspeichereinheit (1-7) gespeicherten Daten benutzerspezifisch zuordnet, wobei die benutzerspezifische Erkennung anhand einer Fahreridentifikation durch das Kraftfahrzeug anhand einer Erkennung des Fahrzeugschlüssels des Fahrers erfolgt, wobei die Memory-Einheit (1-6) in der Positionsspeichereinheit (1-7) zu den Daten eine dem Fahrzeugschlüssel zugeordnete Kennung abspeichert.

## Claims

1. System with a control unit (1-5) for controlling at least one air nozzle (1-8; 2-1; 3-1),
- wherein the air nozzle (1-8; 2-1; 3-1) comprises components (3-3, 3-4, 3-5, 3-6) for influencing the airflow, which is to be conducted through the air nozzle (1-8; 2-1; 3-1), and electronic units (1-6, 1-7), which control these, in the form of a memory unit (1-6) and a position storage unit (1-7), wherein the memory unit (1-6) is connected with at least one means (2-2, ..., 2-10) by way of which the components (3-3, 3-4, 3-5, 3-6) are settable singly and/or individually or in common,
- wherein at least one user-specific parameter and/or at least one configuration, which consists or consist of data with respect to the settings of the components (3-3, 3-4, 3-5, 3-6) of the air nozzle (1-8), are assignable to the at least one air nozzle (1-8; 2-1; 3-1), which data are stored in the position storage unit (1-7),
- wherein the control unit (1-5) conducts to the memory unit (1-6) of the at least one air nozzle (1-8; 2-1; 3-1) at least one control command, which is received by way of a connected bus system (1-1), for the at least one air nozzle (1-8; 2-1; 3-1),
- wherein the memory unit (1-6) converts the at least one control command into one or more executable control commands for the at least one means (2-2, ... , 2-10) and carries out execution thereof by way of the at least one means (2-2, ..., 2-10),
- wherein the at least one means (2-2; ... 2-10) also comprises at least one sensor (2-3; 2-4; 2-7; 2-8) which detects the setting of the components (3-3, 3-4, 3-5, 3-6) and the data of which can be called up by the memory unit (1-6) and stored in the position storage unit (1-7), wherein the storage takes place with reference to the at least one sensor (2-3; 2-4; 2-7; 2-8), and
- wherein the memory unit (1-6) so controls the components (3-3, 3-4, 3-5, 3-6) by way of the at least one means (2-2; ...; 2-10) that the components (3-3, 3-4, 3-5, 3-6) execute movement sequences.

2. System according to claim 1, **characterised in that** the control unit (1-5) conducts the at least one control command for the at least one air nozzle (1-8; 2-1; 3-1) unidirectionally to the memory unit (1-6).

3. System according to claim 1 or 2, **characterised in that** the control unit (1-5) is so designed that this receives no feedback from the memory unit (1-6) so that the connection between the control unit (105) and the memory unit (1-6) has a unidirectional configuration.

4. System according to any one of the preceding claims 1 to 3, **characterised in that** the at least one user-specific parameter and/or the at least one configuration of the at least one means (2-2; ... 2-10) of the components (3-3, 3-4, 3-5, 3-6) of the at least one air nozzle (1-8; 2-1; 3-1) is or are storable in the position storage unit (1-7) and the memory unit (1-7) undertakes control of the components (3-3, 3-4, 3-5, 3-6) of the at least one air nozzle (1-8; 2-1; 3-1) with use of the at least one user-specific parameter and/or the at least one configuration of the components (3-3, 3-4, 3-5, 3-6) stored in the position storage unit.

5. System according to any one of the preceding claims 1 to 4, **characterised in that** the memory unit (1-6) determines the at least one user-specific parameter and/or the at least one configuration of the components (3-3, 3-4, 3-5, 3-6) on the basis of parameters or settings of the at least one means (2-2, ..., 2-10) and the memory unit (1-6) stores these parameters or the setting or settings of the at least one means (2-2, ..., 2-10) or, several means (2-2, ..., 2-10) are present, the settings or parameters of the means (2-2, ..., 2-10) in the form of digital data in the position storage unit (1-7).

6. System according to any one of the preceding claims, **characterised in that** the air nozzle (1-8; 2-1; 3-1) serves for guidance of an air flow from an air feed shaft or from an air feed duct in heating, ventilating or air-conditioning installations for passenger compartments, load compartments or vehicle driver cabins in motor vehicles, land vehicles, air vehicles or water vehicles.

7. System according to claim 1 or 6, **characterised in that** the air nozzle (1-8; 2-1; 3-1) comprises a housing (3-2) which is insertable into a wall passage or mountable therebehind and has at the rear side a connection for an air feed shaft or an air feed duct as well as an air outflow opening at a front side, wherein arranged in the housing (3-2) is at least one slat block (3-3; 3-4) comprising at least two mechanically intercoupled slats (3-5; 3-6) which are so arranged in the slat block (3-3; 3-4) that the at least two slats (3-5; 3-6) are pivotable about an axis in such a manner that the air flow issuing from the air outflow opening of the air nozzle (1-8; 2-1; 3-1) is deflectable in its orientation by the at least two intercoupled slats (3-5, 3-6) or the at least two slats (3-5; 3-6) almost completely close the air outflow opening in the housing (3-2) so as to prevent the air flow.

8. System according to any one of the preceding claims, **characterised in that** the memory unit (1-6) communicates with the at least one means (2-2; ...; 2-10) and that the at least one means (2-2; 2-5; 2-6; 2-9; 2-10) is an electrical setting means or an actuator or an electrical motor or a step motor and serves for setting or adjusting the components (3-3, 3-4, 3-5, 3-6) of the air nozzle (1-8; 2-1; 3-1).

9. System according to any one of the preceding claims, **characterised in that** the memory unit (1-6) comprises a microcomputer unit or a microcontroller unit and the position storage unit (1-7) is a read-only memory, particularly an SRAM memory, and/or that the position storage unit (1-7) is a part of the memory of the microcomputer unit or of the microcontroller unit.

10. System according to claim 7, **characterised in that** one of the sensors (2-3; 2-4; 2-7; 2-8) serves for detection and ascertaining the setting of the at least two slats (3-5; 3-6) of the slat block (3-3; 3-4) and/or of the slat block (3-3; 3-4) in relation to the housing (3-2).

11. System according to any one of the preceding claims, **characterised in that** an input unit is provided, on the continuing actuation of which by means of inputs by a user the control unit (1-5) transmits to the memory unit (1-6) commands for setting the components (3-3, 3-4, 3-5, 3-6) in such a way that at least the components (3-3, 3-4, 3-5, 3-6) change the positions thereof relative to the housing (3-2) or the air flow in the housing (3-2), and the memory unit (1-6) after the continuing actuation has concluded stores in the position storage unit (1-7) this change in the positions or the changed position of the at least one component (3-3, 3-4, 3-5, 3-6).

12. System according to any one of the preceding claims, **characterised in that** the memory unit (1-6) provides user-specific assignment of the data stored in the position storage unit (1-7), wherein the user-specific recognition takes place on the basis of a driver identification by the motor vehicle on the basis of recognition of the vehicle key of the driver, wherein the memory unit (1-6) stores in the position storage unit (1-7) with respect to the data an identification associated with the vehicle key.

## Revendications

1. Système comprenant une unité de commande (1-5) pour l'actionnement d'au moins une buse à air (1-8 ; 2-1 ; 3-1),
- dans lequel la buse à air (1-8 ; 2-1 ; 3-1) présente des éléments (3-3, 3-4, 3-5, 3-6) pour influencer le flux d'air à guider au travers de la buse à air (1-8 ; 2-1 ; 3-1) et des unités électroniques (1-6, 1-7) sous forme d'une unité mémoire (1-6) et d'une unité de mise en mémoire de la position (1-7) commandant ceux-ci, dans lequel l'unité mémoire (1-6) est reliée à au moins un moyen (2-2,..., 2-10) par l'intermédiaire duquel les éléments (3-3, 3-4, 3-5, 3-6) peuvent être réglés seuls et/ou individuellement ou conjointement,
- dans lequel ladite au moins une buse à air (1-8 ; 2-1 ; 3-1) peut être associée à au moins un paramètre spécifique de l'utilisateur et/ou à au moins une configuration constituée de données des positions des éléments (3-3, 3-4, 3-5, 3-6) de la buse à air (1-8), lesquelles sont mises en mémoire dans l'unité de mise en mémoire de position (1-7),
- dans lequel l'unité de commande (1-5) reçoit au moins un ordre de commande pour ladite au moins une buse à air (1-8 ; 2-1 ; 3-1) par l'intermédiaire d'un système de bus (1-1) raccordé et le transmet à l'unité mémoire (1-6) de ladite au moins une buse à air (1-8 ; 2-1 ; 3-1),
- dans lequel l'unité mémoire (1-6) transforme ledit au moins un ordre de commande en un ou plusieurs ordres d'actionnement pouvant être réalisés pour ledit au moins un moyen (2-2,..., 2-10) et le réalise par l'intermédiaire dudit au moins un moyen (2-2,..., 2-10),
- dans lequel ledit au moins un moyen (2-2 ; ... ; 2-10) comprend également au moins un capteur (2-3 ; 2-4 ; 2-7 ; 2-8), qui détecte la position des éléments (3-3, 3-4, 3-5, 3-6) et dont les données peuvent être extraites de l'unité mémoire (1-6) et mises en mémoire dans l'unité de mise en mémoire de position (1-7), dans lequel la mise en mémoire est effectuée en lien avec au moins un capteur (2-3 ; 2-4 ; 2-7 ; 2-8), et
- dans lequel l'unité mémoire (1-6) actionne les éléments (3-3, 3-4, 3-5, 3-6) par l'intermédiaire dudit au moins un moyen (2-2 ; ... ; 2-10), de telle manière que les éléments (3-3, 3-4, 3-5, 3-6) réalisent des séquences de mouvement.

2. Système selon la revendication 1, **caractérisé en ce que** l'unité de commande (1-5) transmet ledit au moins un ordre de commande pour ladite au moins une buse à air (1-8 ; 2-1 ; 3-1) de manière unidirectionnelle à l'unité mémoire (1-6).

3. Système selon la revendication 1 ou 2, **caractérisé en ce que** l'unité de commande (1-5) est réalisée de manière à ne recevoir aucune information en retour de l'unité mémoire (1-6), de sorte que la liaison entre l'unité de commande (1-5) et l'unité mémoire (1-6) est unidirectionnelle.

4. Système selon l'une des revendications précédentes 1 à 3, **caractérisé en ce que** ledit au moins un paramètre spécifique de l'utilisateur et/ou ladite au moins une configuration dudit au moins un moyen (2-2 ; ... ; 2-10) des éléments (3-3, 3-4, 3-5, 3-6) de ladite au moins une buse à air (1-8 ; 2-1 ; 3-1) peuvent être mis en mémoire dans l'unité de mise en mémoire de position (1-7) et l'unité mémoire (1-7) procède à l'actionnement des éléments (3-3, 3-4, 3-5, 3-6) de ladite au moins une buse à air (1-8 ; 2-1 ; 3-1) au moyen dudit au moins un paramètre spécifique de l'utilisateur mis en mémoire dans l'unité de mise en mémoire de position (1-7) et/ou de ladite au moins une configuration des éléments (3-3, 3-4, 3-5, 3-6).

5. Système selon l'une des revendications précédentes 1 à 4, **caractérisé en ce que** l'unité mémoire (1-6) détermine ledit au moins un paramètre spécifique de l'utilisateur et/ou ladite au moins une configuration des éléments (3-3, 3-4, 3-5, 3-6) au moyen des paramètres ou des positions dudit au moins un moyen (2-2, ..., 2-10) et l'unité mémoire (1-6) met en mémoire ces paramètres ou la position ou les positions dudit au moins un moyen (2-2, ..., 2-10) ou, en présence de plusieurs moyens (2-2, ..., 2-10), les positions ou les paramètres des moyens (2-2, ..., 2-10) sous forme de données numériques dans l'unité de mise en mémoire de position (1-7).

6. Système selon l'une des revendications précédentes, **caractérisé en ce que** la buse à air (1-8 ; 2-1 ; 3-1) sert à guider un flux d'air provenant d'un puits d'amenée d'air ou d'une conduite d'amenée d'air dans des systèmes de chauffage, de ventilation ou de climatisation d'habitacles, de compartiments à marchandises ou de cabines de conducteur de véhicule dans des véhicules automobiles, des véhicules terrestres, aériens ou marins.

7. Système selon la revendication 1 ou 6, **caractérisé en ce que** la buse à air (1-8 ; 2-1 ; 3-1) comprend un carter (3-2) qui peut être inséré dans un passage de paroi ou monté derrière un passage de ce type et un raccordement arrière pour un puits d'amenée d'air ou une conduite d'amenée d'air ainsi qu'une ouverture d'évacuation d'air avant, dans lequel au moins un bloc de lamelles (3-3 ; 3-4), qui comprend au moins deux lamelles (3-5 ; 3-6) accouplées mécaniquement l'une à l'autre, est agencé dans le carter (3-2), lesdites lamelles sont agencées dans le bloc de lamelles (3-3 ; 3-4) de manière à ce que lesdites au moins deux lamelles (3-5 ; 3-6) puissent pivoter autour d'un axe, de telle sorte que l'orientation du flux d'air sortant de l'ouverture d'évacuation d'air de la buse à air (1-8 ; 2-1 ; 3-1) peut être déviée par lesdites au moins deux lamelles (3-5 ; 3-6) accouplées l'une à l'autre ou que lesdites au moins deux lamelles (3-5 ; 3-6) ferment entièrement l'ouverture d'évacuation d'air dans le carter (3-2), afin de bloquer le flux d'air.

8. Système selon l'une des revendications précédentes, **caractérisé en ce que** l'unité mémoire (1-6) communique avec ledit au moins un moyen(2-2 ; ... ;2-10) et **en ce que** ledit au moins un moyen (2-2 ; 2-5 ; 2-6 ; 2-9 ; 2-10) est un moyen de réglage électrique ou un actionneur ou un moteur électrique ou un moteur pas à pas et sert à régler ou à déplacer les éléments (3-3, 3-4, 3-5, 3-6) de la buse à air (1-8 ; 2-1 ; 3-1).

9. Système selon l'une des revendications précédentes, **caractérisé en ce que** l'unité mémoire (1-6) comprend une unité microordinateur ou une unité microcontrôleur et l'unité de mise en mémoire de position (1-7) est une mémoire à valeur fixe, en particulier une mémoire SRAM et/ou **en ce que** l'unité de mise en mémoire de position (1-7) est une partie de la mémoire de l'unité microordinateur ou de l'unité microcontrôleur.

10. Système selon la revendication 7, **caractérisé en ce qu'**un des capteurs (2-3, 2-4, 2-7, 2-8) sert à détecter et à reconnaître la position desdites au moins deux lamelles (3-5 ; 3-6) du bloc de lamelles (3-3 ; 3-4) et/ou du bloc de lamelles (3-3 ; 3-4) par rapport au carter (3-2).

11. Système selon l'une des revendications précédentes, **caractérisé en ce qu'**une unité de saisie est prévue, avec l'actionnement continu de laquelle, au moyen de saisies effectuées par un utilisateur, l'unité de commande (1-5) envoie à l'unité mémoire (1-6) des ordres de réglage des éléments (3-3, 3-4, 3-5, 3-6) de telle manière qu'au moins les éléments (3-3, 3-4, 3-5, 3-6) modifient leurs positions par rapport au carter (3-2) ou au flux d'air dans le carter (3-2), et l'unité mémoire (1-6) met en mémoire cette modification des positions ou la position modifiée dudit au moins un élément (3-3, 3-4, 3-5, 3-6) dans l'unité de mise en mémoire de position (1-7) à la fin de l'actionnement continu.

12. Système selon l'une des revendications précédentes, **caractérisé en ce que** l'unité mémoire (1-6) associe les données mises en mémoire dans l'unité de mise en mémoire (1-7) de manière spécifique à l'utilisateur, dans lequel la reconnaissance spécifique à l'utilisateur est réalisée sur la base d'une identification du conducteur par le véhicule automobile à l'aide d'une reconnaissance de la clé du véhicule du conducteur, dans lequel l'unité mémoire (1-6) met en mémoire dans l'unité de mise en mémoire de position (1-7) par rapport aux données un code d'identification associé à la clé du véhicule.
